# EUROPEAN PATENT SPECIFICATION

(11) **EP 2 091 788 B1**
(45) Date of publication and mention of the grant of the patent: **15.12.2010**
(21) Application number: 06847291.9
(22) Date of filing: 12.12.2006
(51) Int. Cl.: B60R 21/017, B60R 21/26, B60R 21/01, B60R 22/46, B60R 21/015, B60R 21/268

(54) **A SAFETY SYSTEM FOR USE IN A MOTOR VEHICLE**
SICHERHEITSSYSTEM ZUR VERWENDUNG IN EINEM KRAFTFAHRZEUG
SYSTÈME DE SÉCURITÉ DESTINÉ À ÊTRE UTILISÉ DANS UN VÉHICULE À MOTEUR

(43) Date of publication of application: 26.08.2009
(73) Proprietor: Autoliv Development AB, 447 83 Vårgårda (SE)
(72) Inventor: HJERPE, Erik, 423 61 Torslanda (SE)
(74) Representative: Beattie, Alex Thomas Stewart
(86) International application number: PCT/IB2006/004073
(87) International publication number: WO 2008/072027

(56) References cited:
- WO-A-2006/128099
- DE-A1- 10 321 871
- FR-A- 2 467 740

## Description

### Description of Invention

THE PRESENT INVENTION relates to a safety system, and more particularly relates to a safety system for use in a motor vehicle comprising one or more actuable safety devices such as air-bags, seat-belt pre-tensioners, energy absorbers etc.

WO 2006/128 099 describes a system according to the preamble of claim 1.

It is now widely known to provide motor vehicles with a number of different safety devices, most notably inflatable air-bag arrangements and/or seat-belt pre-tensioners. The most common types of such safety devices are arranged to be pyrotechnically operable, that is, the safety arrangements are provided with pyrotechnic charges which are ignited by a squib and which are typically arranged as part of an inflator or gas generator configured to direct a large, rapidly-expanding volume of gas into an operable part of a safety device in order to inflate an air-bag or drive a piston of a safety-belt pre-tensioner arrangement.

Safety devices of the type described briefly above have been provided so as to be pyrotechnically operable in order to ensure that the safety device is operated in an extremely short period of time so as to be properly deployed in the event of an accident situation such as a crash involving a motor vehicle. However, a drawback of such arrangements is that because such safety devices are pyrotechnically operable, they are one-use items which cannot be re-set after actuation for possible subsequent use. This is not generally a problem when the safety device has been actuated in a severe accident situation because it is much more important to prevent injury and possible death to occupants of a motor vehicle than it is to save money and inconvenience in providing a re-settable device, particularly when in such severe impacts, the motor vehicle as a whole is likely to be very severely damaged in any event. However, in low impact accident situations or when it is desirable to actuate (at least partially) a safety-device upon receipt of a signal predictive of a crash (a pre-crash sensor), it is preferable for a safety device to be actuable in a manner which can be reversed. For example, if a safety device is installed in order to be primed in advance of an accident situation upon receipt of a predictive pre-crash signal, it is clearly advantageous to be able subsequently to re-set the safety device in the event that the accident was avoided or involved only a very low impact. Re-settable safety devices of this general type have been proposed previously such as, for example, in US2005/0218632A1 which discloses a motor vehicle provided with a central air supply system in order to operate a number of different pneumatically-operated safety devices such as air-bags and seat-belt pre-tensioners.

In the arrangement of US 2005/0218632A1, after actuation of the restraint devices, regardless of whether or not an impact has occurred and also regardless of the severity of any impact, the restraint devices can be reset to their initial position, without the need for any complicated service or replacement of any component. However, relying solely upon reversible pneumatic safety devices of the type disclosed in US2005/0218632A1 can be disadvantageous because pneumatically-operated safety devices cannot easily be actuated sufficiently quickly in order to provide a proper degree of protection in more severe accident situations occurring at higher speeds. Indeed, it is thought that pre-tensioning of a seat-belt retractor arrangement using only compressed air would necessitate an air supply system able to generate gas pressures of 70 bar or more in order to provide a similar performance to that of a pyrotechnically operable seat-belt pre-tensioner arrangement.

It is therefore desirable to provide a safety system for a motor vehicle which can be operated in a number of different operating modes.

The present invention seeks to provide an improved safety system for a motor vehicle.

The present invention provides a safety system for use in a motor vehicle, the system comprising: a source of compressed gas; at least one safety device wherein the at least one said safety device is operatively connected to said source of compressed gas so as to be pneumatically-operable; a sensor arrangement; a control unit, and a pyrotechnic charge, wherein the at least one said safety device is operatively connected to said pyrotechnic charge so as to be pyrotechnically-operable, and wherein the control unit is configured to actuate the or each device pneumatically upon receipt of a first signal from the sensor arrangement, and to actuate the or each device pyrotechnically upon receipt of a second signal from the sensor arrangement and wherein said first signal is indicative of a predicted crash, and said second signal is indicative of an actual crash.

Advantageously, the or each safety device is capable of being re-set after pneumatic actuation for subsequent re-actuation, but is actuated non-resettably when it is actuated pyrotechnically.

Preferably, said second signal is indicative of an actual crash above a predetermined severity threshold.

Conveniently, the safety system comprises a safety device in the form of an airbag connected to a pyrotechnically operable inflator.

Advantageously, the airbag is also connected to said source of compressed gas so as to be pneumatically-operable in a first mode, and pyrotechnically-operable in a second mode, wherein said first mode partially pre-inflates the airbag with said compressed gas, and said second mode inflates the airbag with inflating gas from the inflator.

Preferably, the safety system comprises a safety device in the form of a pneumatically-operable seat-belt pretensioner connected to said source of compressed gas.

Conveniently, said seat-belt pretensioner is also connected to a pyrotechnic charge so as to be pneumatically-operable in a first mode and pyrotechnically-operable in a second mode, wherein said first mode takes up an initial degree of slack in the seat-belt.

Advantageously, the seat-belt pretensioner comprises a rotor provided within a housing for rotation relative thereto, and wherein a cover plate is provided in order to close the housing, the cover plate being provided with a gas inlet aperture and a gas outlet aperture in fluid communication with the rotor within the housing and wherein, in use, gas is supplied to the rotor through the gas inlet, the gas thus serving to rotate the rotor and hence also rotate a boss which serves to rotate a spool in a manner effective to tighten the seat-belt.

Preferably, the safety system comprises a safety device which is pneumatically-operable to move at least part of a seat-mounted head-rest towards the head of a seat-occupant upon receipt of a first said signal.

Conveniently, the safety system comprises a safety device which is pneumatically-operable to move at least part of a vehicle-bumper upon receipt of a first said signal.

Advantageously, the safety system comprises a safety device which is pneumatically-operable to reinforce part of a vehicle-structure upon receipt of a first said signal.

Preferably, the safety system comprises a safety device in the form of a bonnet-lifter, which is pneumatically operable to lift part of a vehicle bonnet upon receipt of a first said signal.

Conveniently, the safety system comprises a safety device which is pneumatically operable to slide a vehicle seat relative to the chassis of the vehicle upon receipt of a said first signal.

So that the invention may be more readily understood, and so that further features thereof may be appreciated, embodiments of the invention will now be described, by way of example, with reference to the accompanying drawings, in which:
FIGURE 1 is a schematic illustration showing a safety system in accordance with the present invention;
figure 2 is an exploded perspective view illustrating a pneumatically-operable seat-belt pre-tensioner;
FIGURE 3 is a perspective view illustrating a seat-belt pre-tensioner of alternate form;
FIGURES 4(a) and 4(b) illustrate a re-settable, pneumatically-operable arrangement to provide reinforcement to the structure of the motor vehicle;
FIGURES 5(a) and 5(b) illustrate a re-settable hood or bonnet lifter;
FIGURES 6(a) and 6(b) illustrate a re-settable vehicle seat restraint:
FIGURES 7(a) and 7(b) illustrate a re-settable anti-whiplash restraint for a motor vehicle head-rest; and
FIGURES 8(a) and 8(b) illustrate a re-settable energy-absorbing arrangement suitable for use in a motor vehicle bumper or fender.

The present invention is based upon the principle of combining one or more re-settble pneumatically-operated safety devices with one or more pyrotechnically-operated safety devices, the arrangement being configured so that whether or not a respective safety device is operated pneumatically, pyrotechnically, or not at all, depends upon particular crash parameters. In a pre-crash situation, for example, it may be desirable to actuate one or more safety devices pneumatically so that should no impact actually occur (i.e. a false alarm), or if only a relatively low impact takes place resulting in relatively minor damage to the motor vehicle, the or each restraint device can be re-set ready for subsequent re-actuation in the future. In more severe crashes, with serious damage to the motor vehicle and the likelihood of serious injury to the occupants of a motor vehicle, increased protection is desired and so the system is configured for pyrotechnic actuation of one or more of the safety devices in order to ensure maximum possible protection to the vehicle occupants. In this situation, where damage to the motor vehicle is likely to be very significant, there is no significant disadvantage to non-resettable actuation of the safety devices.

Preferably, the safety arrangement is adapted to have more than one operating mode, for example a pneumatic re-settable mode, a pyrotechnic non-re-settable mode, and combinations thereof.

In an arrangement where pre-crash actuation of safety devices is desirable, for example in response to a predictive pre-crash signal from an appropriate sensor, it is desirable only for the re-settable pneumatic operating mode to be used so that should there be no eventual impact at all, or possibly only a relatively gentle impact, the safety devices can subsequently be re-set ready for another activation some time in the future.

In crash situations where a more severe impact occurs, for example in the event of a crash with another vehicle, it may be desirable for the safety system to be actuated in both a re-settable pneumatic operating mode and a non-resettable pyrotechnic operating mode. For example, the re-settable pneumatic operating mode can be activated during a pre-crash phase in response to a signal from a predictive crash sensor, thereby pre-setting a restraint device in anticipation of a crash. The non-re-settable pyrotechnic operating mode can then be activated during the actual crash phase in response to a signal indicative of an actual crash occurring, in order to provide maximum protection for the occupants of a vehicle.

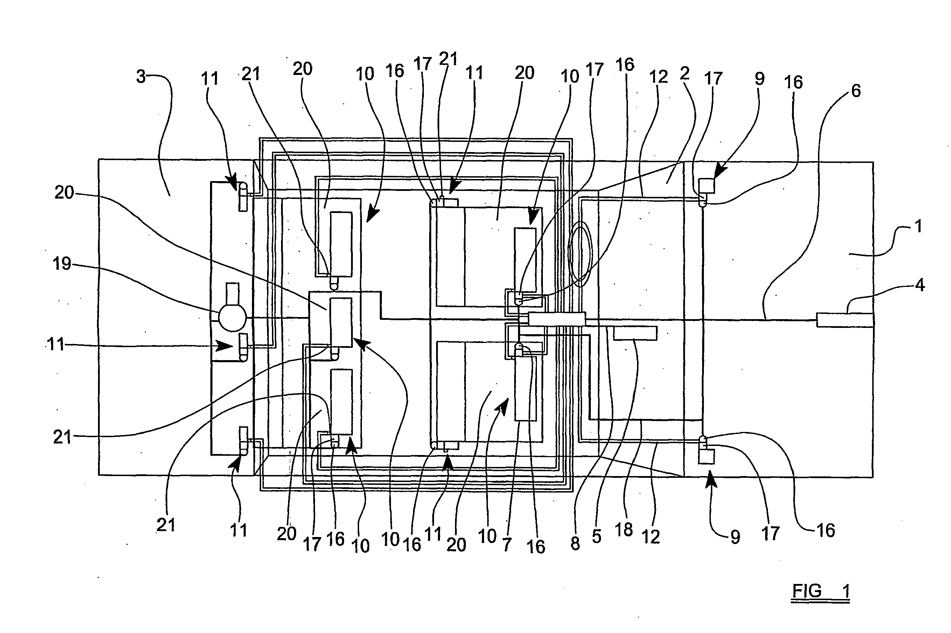

Reference will now be made to Figure 1 which illustrates, in schematic plan form, a safety system in accordance with the present invention installed in a motor vehicle. For the reader's convenience in orientating the drawing, the vehicle's hood or bonnet is illustrated at 1, the vehicle's windscreen at 2, and the vehicle's boot or trunk is illustrated at 3.

The safety arrangement comprises a first sensor 4, which is typically mounted to the chassis of the vehicle in a frontal region, and which takes the form of a pre-crash sensor configured to generate a signal indicative of the likely occurrence of an impact or crash. Such sensors are known *per se* and need not be discussed in further detail here.

Located more centrally along the longitudinal axis of the vehicle is a second sensor 5 which can either be mounted to the chassis of the motor vehicle or conveniently within the passenger cabin such as, for example, within a vehicle seat. The second sensor 5 is an "in-crash sensor" and is configured to generate a signal in response to an actual impact above a predetermined severity-threshold involving the motor vehicle. Sensors of this general type are also known *per se* and will not be described in further detail here.

The first sensor 4 is electrically connected via a wire 6 to an electronic control unit (ECU) 7. Similarly, the second sensor 5 is electrically connected to the ECU via a second wire 8. The first sensor 4 is thus arranged to provide a first signal, along the wire 6, to the ECU, whilst the second sensor 5 is arranged to provide a second signal, along the wire 8, to the ECU 7.

The safety system also comprises a plurality of individual safety devices including a pair of bonnet lifters 9, inflatable pelvis restraint cushions 10, and seat-belt pre-tensioners 11.

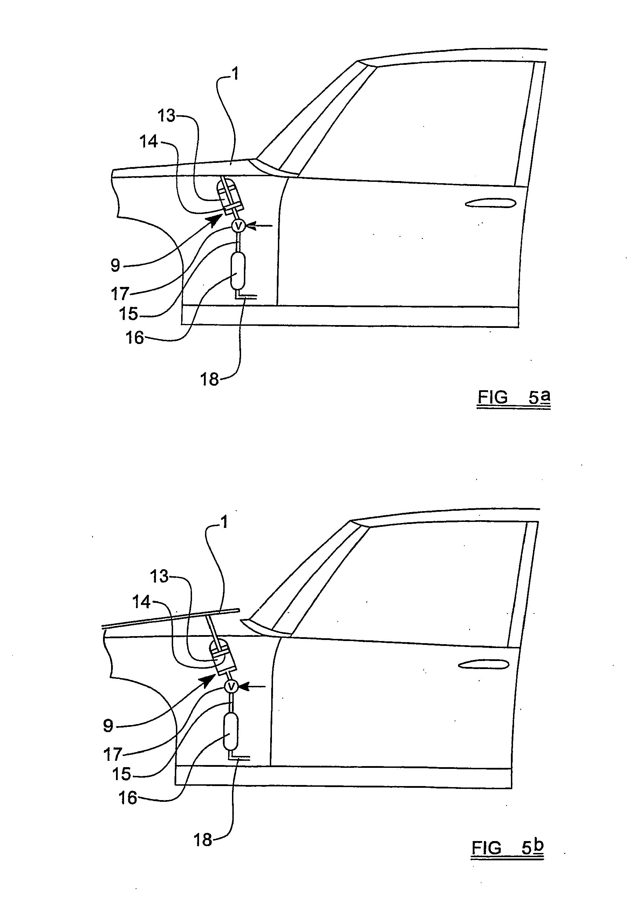

As illustrated in Figure 1, each bonnet lifter 9 is located beneath a respective rear corner of the bonnet 1 and is electrically connected to the ECU via wires 12. A bonnet lifter 9 is illustrated in more detail in Figures 5(a) and 5(b) with Figure 5(a) showing the bonnet lifter in a pre-actuated condition, and Figure 5(b) illustrating the bonnet lifter 9 in an actuated condition.

The bonnet lifter 9 comprises a cylinder 13 within which a piston 14 is slidably received, the piston 14 initially being retracted within the cylinder 13. The lower region of the cylinder 13 is connected, via a gas line 15 to a buffer chamber 16, and a selectively actuable valve 17 is provided in the gas line 15, between the cylinder 13 and the buffer chamber 16. The valve 17 is connected to the wires 12 so as to receive an appropriate actuation signal from the ECU.

As indicated above, Figure 5(a) illustrates the bonnet lifter 9 in a pre-actuated condition in which the piston 14 is housed substantially entirely within the cylinder 13. Upon receipt of an appropriate actuation signal from the ECU, the valve 17 is opened, thereby allowing the flow of gas from the buffer chamber 16 along the gas line 15 and into the cylinder 13, in order to drive the piston 14 outwardly and upwardly, impinging on the undersurface of the bonnet 1 in order to lift the bonnet. The valve 17 may subsequently be vented and closed, thereby allowing the bonnet lifter 9 to be re-set to its pre-actuated condition illustrated in Figure 5(a), thereby allowing the bonnet 1 to be lowered to its closed position.

As will be appreciated, and as is generally conventional, the hood lifters 9 are actuated in the event that the pre-crash sensor 4 detects the likelihood of an accident occurring, for example an impact with a pedestrian, in order to lift the bonnet 1 clear of the engine block, thereby providing a degree of protection to the pedestrian in the event of an impact with a motor vehicle.

As illustrated most clearly in Figure 1, the buffer chambers 16 of each bonnet lifter 9 are connected, via gas line 18 to a main pressure tank 19 which, in turn, is connected to a gas compressor in order to provide a supply of compressed gas along the gas lines 18, to the buffer chambers 16.

Each pelvis-restraint cushion 10 takes the form of an inflatable air-bag located in the front region of a respective seat squab 20 and is inflated in an accident situation in order to restrain forwards movement of the seat occupant relative to the seat.

The inflatable air-bag of each pelvis-restraint cushion 10 is, in a similar manner to the bonnet lifters 9, connected via a gas line to a respective buffer chamber 16, with an actuable valve 17 being provided in that gas line and being electrically connected to the ECU. However, the inflatable air-bag is also provided with pyrotechnic charge which is electrically connected via wires to the ECU and which is actuable in order to activate an inflator in order to direct a large volume of inflating gas into the inflating air-bag.

The pelvis restraint cushions 10 are thus each arranged both for pneumatic operation and pyrotechnic operation. Pneumatic operation occurs upon receipt of an appropriate signal from the ECU effective to open the valve 17, thereby allowing the flow of compressed gas from the buffer chamber 16 into the interior volume of the inflatable air-bag. This actuation might be appropriate, for example, in a pre-crash situation in response to an appropriate predictive crash signal from the pre-crash sensor 4, serving to pre-inflate the pelvis restraint cushion, at least to a partial degree. Pyrotechnic operation of the pelvis restraint cushions can either occur independently of, or subsequent to pneumatic operation, by receipt of an appropriate signal from the ECU effective to fire the pyrotechnic charge 21, thereby directing a large volume of inflating gas from the inflator into the air-bag cushion. Pyrotechnic actuation is intended to occur upon receipt of a crash signal from the in-crash sensor 5.

The seat-belt pre-tensioners 11, illustrated schematically in Figure 1, are each arranged to be operable either pneumatically or pyrotechnically, in a similar manner to the pelvis restraint cushions 10. In particular, each seat-belt retractor 11 is provided with a respective buffer chamber 16 in fluid communication with the main pressure tank 19, and an actuating valve 17 in the gas line connecting the buffer chamber 16 to the pre-tensioner itself. In addition, each pre-tensioner 11 is also provided with a pyrotechnic charge 21 for pyrotechnic actuation of the pre-tensioner.

In operation, each dual-operable seat-belt pre-tensioner 11 can initially be operated pneumatically, upon receipt of a first signal from the ECU in response to a signal from the predictive crash sensor 4. Pneumatic operation of the seat-belt pre-tensioners 11 in this manner can serve to take up an initial degree of slack in the seat-belt passing around a seat occupant in anticipation of an actual impact. In the event that no impact eventually occurs, the pneumatically-operated seat-belt pre-tensioner can then be re-set. However, if an actual impact is subsequently detected by the in-crash sensor 5, a second signal is sent by the ECU to the pyrotechnic charge 21 in order to operate the seat-belt pre-tensioner 11 pyrotechnically.

It should therefore be appreciated that the main pressure tank 19, which is served by a gas compressor (not illustrated) is fluidly connected to each of the pneumatically-operable safety devices, including the bonnet lifters 9, the seat-belt pre-tensioners 11 and the pelvic restraint cushions 10, whilst the pelvic restraint cushions 10 and the seat-belt pre-tensioners 11 are also arranged for pyrotechnic operation by the provision of respective pyrotechnic charges electrically connected to the ECU.

The pneumatically-operable safety devices can all be re-set after pneumatic operation, provided no pyrotechnic operation has also occurred, in readiness for subsequent re-use.

It should therefore be appreciated that the main advantage of the above-described safety system is one of flexibility. Depending upon the nature of the crash situation, different operating modes can be used. By combining resettable pneumatic safety devices with non-re-settable pyrotechnic safety devices, virtually all types of impact situations can be effectively handled, without unnecessary non-re-settable actuation of appropriate safety devices.

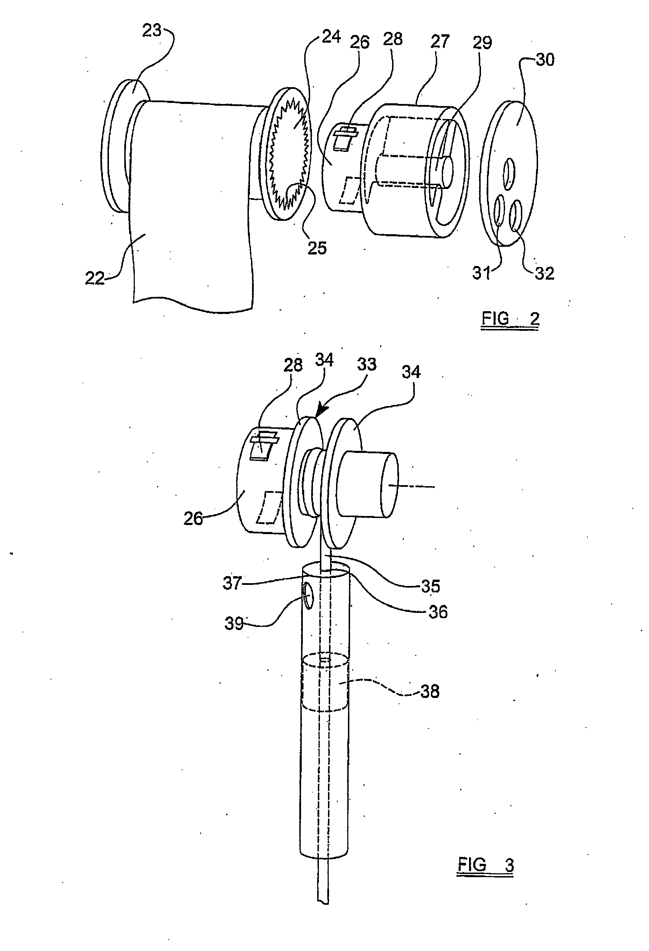

Figure 2 illustrates a re-settable pneumatically-operable seat-belt retractor. The seat-belt 22 is wound on a spool 23 having an internal bore 24 provided with inwardly-directed gear teeth 25. Received within the bore 24 is an outwardly-directed boss 26 which extends outwardly from a generally cylindrical housing 27. The peripheral surface of the boss 26 is provided with a number of locking bars 28 which are configured to engage, in one direction of rotation, with the teeth provided inside the bore 24. A rotor 29 is provided within the housing 27 for rotation relative thereto, and is keyed to the boss 26 for co-rotation therewith. A cover plate 30 is provided in order to close the housing 27, the cover plate being provided with a gas inlet aperture 31 and a gas outlet aperture 32, in fluid communication with the rotor 29 within the housing 27.

In operation of the retractor illustrated in Figure 2, gas is supplied from the buffer chamber 16 (not illustrated in Figure 2), to the rotor 29, through the gas inlet 31, the gas thus serving to rotate the rotor 29 and hence also rotate the boss 26 which serves to rotate the spool 23 in a manner effective to tighten the seat-belt 22.

Figure 3 illustrates an alternative form of seat-belt retractor for possible use with the safety system of the present invention. In Figure 3, the spool 23, with the seat-belt 22 wound on it has been omitted for the sake of clarity, but it should be appreciated that a substantially identical spool 23 is used as in the arrangement of Figure 2. In this arrangement, the boss 26 is fixedly mounted to a wheel 33 which comprises a pair of spaced-apart circular flanges 34 between which a wire 35 extends, the wire being initially pre-wound on the wheel 33 or otherwise keyed to the wheel 33 between the two flanges 34. The wire 35 extends through an aperture 36 in the end of a cylinder 37. The end of the wire 35 remote from the wheel 33 is attached to a piston 38 which is slidably received within the cylinder 37. A gas inlet aperture 39 is provided in the sidewall of the cylinder 37, in an upper region of the cylinder 37.

Upon pneumatic operation of the retractor arrangement illustrated in Figure 3, gas is provided from the buffer chamber 16 (not illustrated in Figure 3), through the gas inlet 39, which serves to drive the piston 38 downwardly within the cylinder 37, thereby pulling the wire 35 through the aperture 36 in the end of the cylinder 37, and hence rotating the wheel 33, in an anti-clockwise sense as illustrated in Figure 3. This serves to rotate the boss 26 which, by virtue of the locking bars 28 serves to rotate the spool 23 in a direction effective to tighten the seat-belt 22.

Each of the seat-belt retractors illustrated in Figures 2 and 3 can also be provided with inflating gas from a pyrotechnic charge, through the respective gas inlet apertures 31, 39 for pyrotechnic operation upon receipt of an appropriate actuation signal from the ECU.

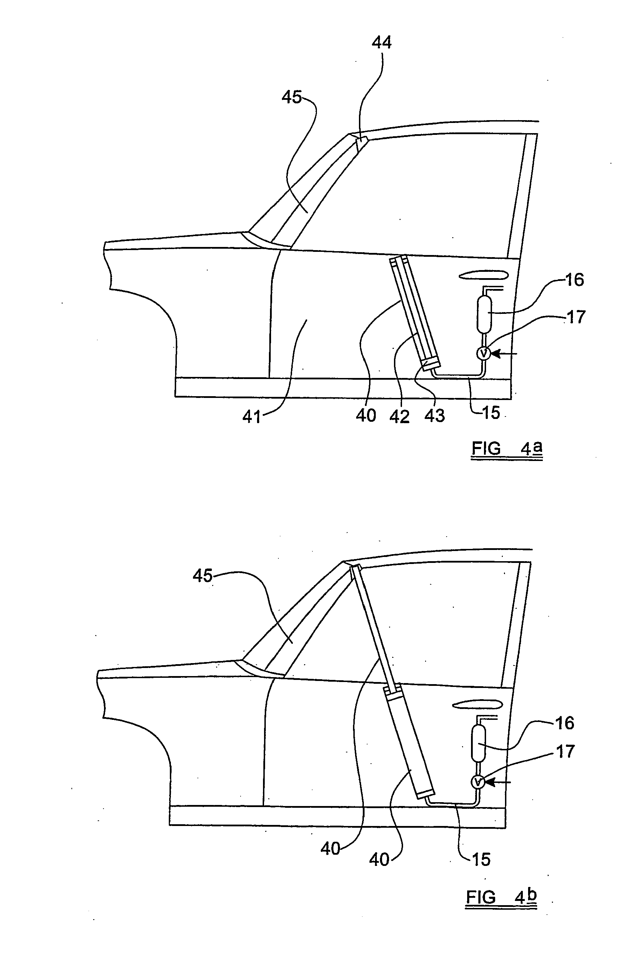

Figures 4(a) and 4(b) illustrate a safety device in the form of a piston arrangement effective to reinforce the structure of a motor vehicle, in the manner of a roll-over bar. A cylinder 40 is provided within the structure of a door 41 of the motor vehicle, the cylinder 40 containing a slidably-mounted piston 42. In the arrangement illustrated in Figure 4(a), the piston 42 is initially substantially completely received within the cylinder 40 such that the piston head 43 is located at the lower end of the cylinder 40, with the cylinder 40 being directed upwardly, and forwardly, towards a recess 44 provided in the structure of the motor vehicle at the top of the A-post 45.

The lower end of the cylinder 40 is connected, via a gas line 15 to a buffer chamber 16 which is then connected, via a further gas line to the main pressure tank 19 (not illustrated in Figure 4). An actuating valve 17 is provided in the gas line 15, between the buffer chamber 16 and the cylinder 40, the valve 17 being electrically connected to the ECU.

Upon receipt of an appropriate actuating signal from the ECU, the valve 17 is opened, thereby allowing the flow of compressed gas from the buffer chamber 16, through the gas line 15 and into the chamber 40. The gas is thus effective to drive the piston 42 forwardly and upwardly, such that the end of the piston rod engages the recess 44 at the top of the A-post 45, the arrangement as a whole thereby serving to reinforce the structure of the motor vehicle and to assist in preventing collapse of the vehicle cabin in the even of a roll-over accident situation. It is envisaged that the arrangement illustrated in Figures 4(a) and 4(b) would be incorporated into a safety system of the present invention so as to be pneumatically operable upon receipt either of a pre-crash signal from the pre-crash sensor 4, indicative of the likelihood of a roll-over accident occurring, or in response to a signal from the in-crash sensor 5 indicative of an actual roll-over accident situation occurring. The reinforcing arrangement of Figures 4(a) and 4(b), being solely pneumatically-operable, can be re-set following actuation.

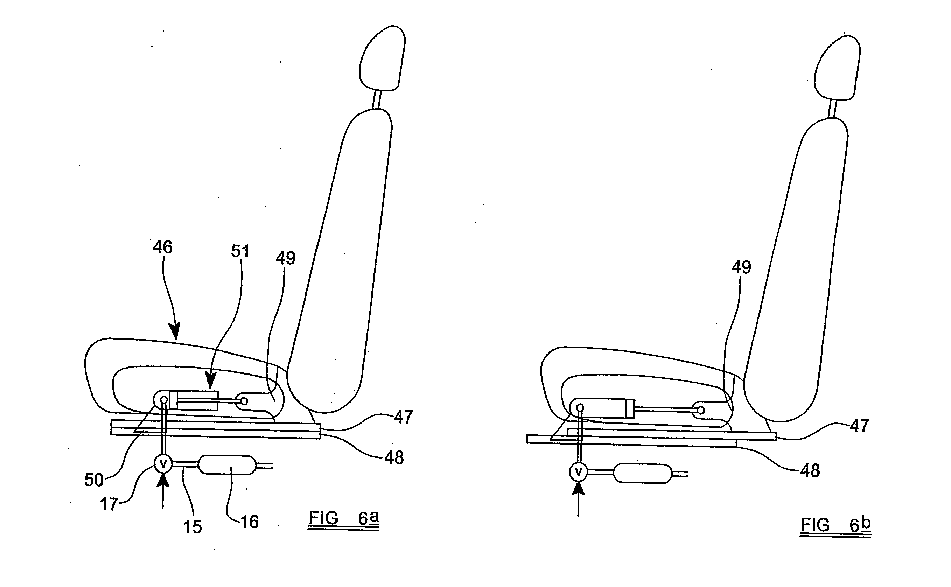

Figures 6(a) and 6(b) illustrate a re-settable seat restraint which can be incorporated into the safety system of the present invention as a pneumatically-operable safety device. A vehicle seat 46 is mounted to a slide rail 47 which is slidably mounted on another slide rail 48 which is fixedly secured, for example by way of bolts, to the structure of the motor vehicle.

The rear part of the squab of the seat is provided with an anchor plate 49. An upstanding anchor plate 50 is secured to the lower slide rail 48, which is mounted to the vehicle structure.

A piston-in-cylinder arrangement 51 is connected between the two anchor plates 49, 50, the piston-in-cylinder arrangement initially having a retracted condition illustrated in Figure 6(a). The cylinder is connected by way of a gas line 15 to the buffer chamber 16 in the same manner as described above, with an electrically-operable actuating valve 17 being provided in the gas line 15.

Upon receipt of an appropriate actuating signal from the ECU, the actuating valve 17 is opened, thereby allowing the flow of compressed gas from the buffer chamber 16 to the cylinder of the piston-in-cylinder arrangement 51. This serves to drive the piston rearwardly within the cylinder, thereby pushing apart the two anchor plates 49, 50. Because the forward anchor plate 50 is secured to the structure of the motor vehicle, this is effective to slide the seat rearwardly on the seat rails 47, 48.

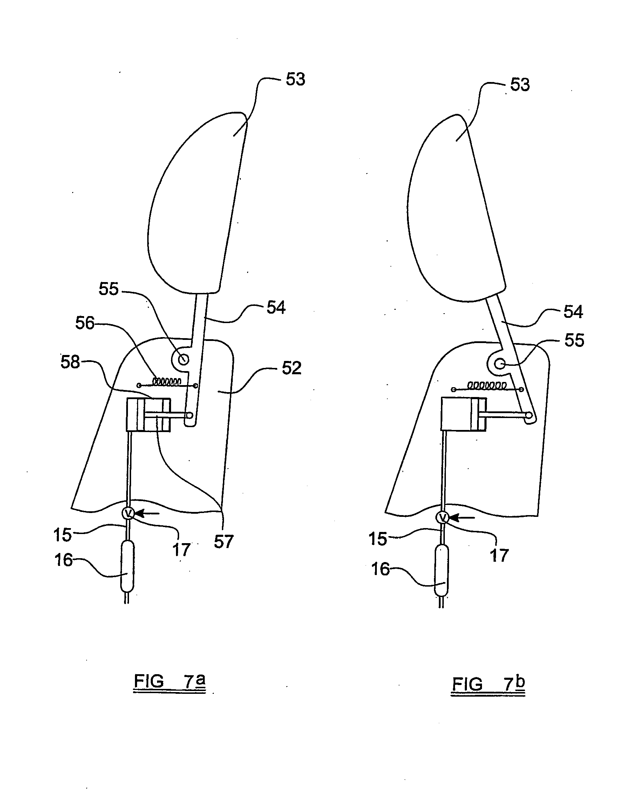

It is envisaged that the seat-restraint arrangement illustrated in Figure 6 will be operable pneumatically either in a pre-crash situation or an actual crash situation in order to extend the distance between an occupant of the seat and the steering wheel or the dashboard of the vehicle. Of course, because the seat-restraint is pneumatically-operable, it can be re-set after actuation. Figures 7(a) and 7(b) illustrate an anti-whiplash head-rest arrangement provided in the upper region of a back-rest 52 of a motor vehicle. The arrangement is intended to move the head-rest 53 forwardly upon actuation of the arrangement, in order to contact the head of a seat-occupant, or at least reduce the distance between the occupant's head and the head-rest 53 in order to reduce the likelihood of the occupant suffering from whiplash injuries.

The head-rest 53 is mounted on a support bar 54 which is pivotally-mounted, at 55 to the rear part of the back-rest 52. At a point below the pivot 55, the support bar 54 is connected to a spring 56, the spring 56 being connected at its other end to the internal structure of the back-rest 52, thereby serving to bias the head-rest to the initial position illustrated in Figure 7(a).

The lowermost end of the support bar 54 is connected to a piston 57 which is slidably received in a cylinder 58. In the same manner as described above with reference to the arrangements in Figures 4, 5 and 6, the cylinder 58 is fluidly connected, via a gas line 15 to a buffer chamber 16, with an electrically-operable valve 17 being provided in the gas line 15.

Upon receipt of an appropriate actuation signal from the ECU, the valve 17 is opened, thereby permitting the flow of compressed gas from the buffer chamber 16, along the gas line 15 and into the cylinder 58. This flow of gas is thus effective to drive the piston 57 rearwardly within the back-rest, which, in turn, drives the lower end of the support bar 54 rearwardly and hence the head-rest cushion 53 forwardly, with a pivoting movement around the pivot point 55.

It is envisaged that the pneumatically-operable anti-whiplash head-rest arrangement of Figures 7(a) and 7(b) would be arranged for actuation upon receipt of a predictive crash signal from the pre-crash sensor 4 or in the event of an actual crash signal from the in-crash sensor 5. In any event, the arrangement can be re-set following pneumatic actuation for subsequent re-use.

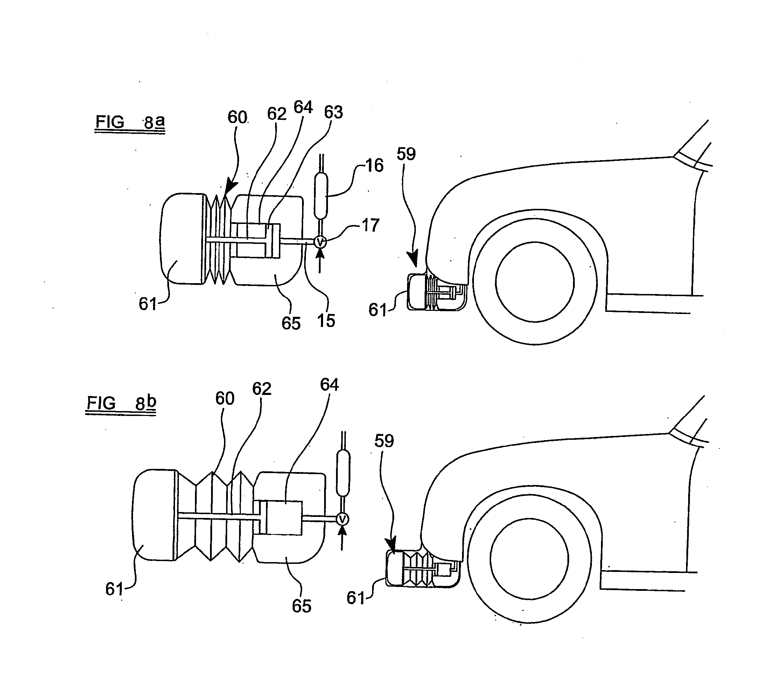

Figures 8(a) and 8(b) illustrate a pneumatically operable safety device in the form of an energy-absorber intended for use in the bumper or fender 59 of a motor vehicle. In this arrangement, the bumper 59 is provided with a bellows arrangement 60, the bellows arrangement 60 being capable of expansion in order to allow movement of the front part of the bumper forwardly, away from the rest of the motor vehicle upon actuation (see Figure 8(b)).

The moveable front part 61 is connected to a piston rod 62 which extends rearwardly, through the bellows part 60, to terminate at a piston head 63 which is slidably received within a cylinder 64. The cylinder 64 is fixedly mounted within the rear part 65 of the bumper. The cylinder 64 is provided in fluid communication, by way of a gas line 15, to the buffer chamber 16, and an electrically operable valve 17 is provided in the gas line 15.

Upon receipt of an appropriate actuating signal from the ECU, the valve 17 is opened in order to allow the flow of compressed gas from the buffer chamber 16, through the gas line 15, to the cylinder 64. This flow of gas serves to drive the piston forwardly, relative to the rear part 65 of the bumper, thereby driving the front part 61 forwardly, and opening up the bellows arrangement 60 as illustrated in Figure 8(b). This forwards movement of the front part 61 of the bumper serves to increase the effective range of movement of the bumper should it come into contact with another object such as a motor vehicle or pedestrian, thereby increasing the energy absorbing properties of the bumper. It will, of course, be appreciated that because the arrangement illustrated in Figures 8 (a) and 8(b) is pneumatically operated, it can be conveniently re-set following actuation, ready for subsequent re-use.

Whilst the present invention has been described with reference to its use with specific safety devices, it should be appreciated that other forms of safety devices could be incorporated into the system of the present invention. For example, frontal or side air-bag devices could also be incorporated into the system of the invention, to be operated pyrotechnically, but also possibly for pneumatic operation in response to a pre-crash signal, for partial pre-inflation.

When used in this specification and claims, the terms "comprises" and "comprising" and variations thereof mean that the specified features, steps or integers are included. The terms are not to be interpreted to exclude the presence of other features, steps or components.

## Claims

1. A safety system for use in a motor vehicle, the system comprising:
a source of compressed gas (19);
at least one safety device (9,10,11) wherein the at least one said safety device (9,10,11) is operatively connected to said source of compressed gas (19) so as to be pneumatically-operable;
a sensor arrangement (4,5);
a control unit (7), and
a pyrotechnic charge (21), wherein the at least one said safety device (9,10,11) is operatively connected to said pyrotechnic charge (21) so as to be pyrotechnically-operable, and wherein the control unit (7) is configured to actuate the or each device (9,10,11) pneumatically upon receipt of a first signal from the sensor arrangement (4,5), and to actuate the or each device (9,10,11) pyrotechnically upon receipt of a second signal from the sensor arrangement (4,5), **characterized in that** said first signal is indicative of a predicted crash, and said second signal is indicative of an actual crash.

2. A safety system according to claim 1, wherein the or each safety device (9,10,11) is capable of being re-set after pneumatic actuation for subsequent re-actuation, but is actuated non-resettably when it is actuated pyrotechnically.

3. A safety system according to any preceding claim, wherein said second signal is indicative of an actual crash above a predetermined severity threshold.

4. A safety system according to any preceding claim comprising a safety device in the form of an airbag (10) connected to a pyrotechnically operable inflator.

5. A safety system according to claim 4, wherein the airbag (10) is also connected to said source of compressed gas (19) so as to be pneumatically-operable in a first mode, and pyrotechnically-operable in a second mode, wherein said first mode partially pre-inflates the airbag (10) with said compressed gas, and said second mode inflates the airbag (10) with inflating gas from the inflator.

6. A safety system according to any preceding claim, comprising a safety device in the form of a pneumatically-operable seat-belt pretensioner (11) connected to said source of compressed gas (19).

7. A safety system according to claim 6, wherein said seat-belt pretensioner (11) is also connected to a pyrotechnic charge (21) so as to be pneumatically-operable in a first mode and pyrotechnically-operable in a second mode, wherein said first mode takes up an initial degree of slack in the seat-belt (22).

8. A safety system according to claim 6 or 7, wherein the seat-belt pretensioner (11) comprises a rotor (29) provided within a housing (27) for rotation relative thereto, and wherein a cover plate (30) is provided in order to close the housing (27), the cover plate (30) being provided with a gas inlet aperture (31) and a gas outlet aperture (32) in fluid communication with the rotor (29) within the housing (27) and wherein, in use, gas is supplied to the rotor (29) through the gas inlet (31), the gas thus serving to rotate the rotor (29) and hence also rotate a boss (26) which serves to rotate a spool (23) in a manner effective to tighten the seat-belt (22).

9. A safety system according to any preceding claim, comprising a safety device which is pneumatically-operable to move at least part of a seat-mounted head-rest (53) towards the head of a seat-occupant upon receipt of a first said signal.

10. A safety system according to any preceding claim, comprising a safety device which is pneumatically-operable to move at least part (61) of a vehicle-bumper (59) upon receipt of a first said signal.

11. A safety system according to any preceding claim, comprising a safety device which is pneumatically-operable to reinforce part of a vehicle-structure upon receipt of a first said signal.

12. A safety system according to any preceding claim comprising a safety device in the form of a bonnet-lifter (9), which is pneumatically operable to lift part of a vehicle bonnet (1) upon receipt of a first said signal.

13. A safety system according to any preceding claim comprising a safety device which is pneumatically operable to slide a vehicle seat (46) relative to the chassis of the vehicle upon receipt of a said first signal.

## Patentansprüche

1. Sicherheitssystem zur Verwendung in einem Kraftfahrzeug, wobei das System umfasst:
eine Druckgasquelle (19);
mindestens eine Sicherheitsvorrichtung (9, 10, 11), wobei die mindestens eine besagte Sicherheitsvorrichtung (9, 10, 11) mit der besagten Druckgasquelle (19) in Wirkverbindung steht, um pneumatisch bedienbar zu sein;
eine Sensoranordnung (4, 5);
eine Steuereinheit (7), und
eine pyrotechnische Ladung (21), wobei die mindestens eine besagte Sicherheitsvorrichtung (9, 10, 11) mit der besagten pyrotechnischen Ladung (21) in Wirkverbindung steht, um pyrotechnisch bedienbar zu sein, und wobei die Steuereinheit (7) konfiguriert ist, um die oder jede Vorrichtung (9, 10, 11) beim Empfang eines ersten Signals von der Sensoranordnung (4, 5) her pneumatisch zu betätigen und um die oder jede Vorrichtung (9, 10, 11) beim Empfang eines zweiten Signals von der Sensoranordnung (4, 5) her pyrotechnisch zu betätigen, **dadurch gekennzeichnet, dass** das besagte erste Signal auf einen vorhergesagten Zusammenstoß hinweist und das besagte zweite Signal auf einen tatsächlichen Zusammenstoß hinweist.

2. Sicherheitssystem nach Anspruch 1, wobei die oder jede Sicherheitsvorrichtung (9, 10, 11) in der Lage ist, nach der pneumatischen Betätigung für nachfolgende Neubetätigungen zurückgesetzt zu werden, jedoch unzurücksetzbar betätigt wird, wenn sie pyrotechnisch betätigt wird.

3. Sicherheitssystem nach einem vorangehenden Anspruch, wobei das besagte zweite Signal auf einen tatsächlichen Zusammenstoß über einem vorher bestimmten Schweregrenzwert hinweist.

4. Sicherheitssystem nach einem vorangehenden Anspruch, das eine Sicherheitsvorrichtung in Form eines mit einem pyrotechnisch bedienbaren Gasgenerator verbundenen Prallsacks (10) umfasst.

5. Sicherheitssystem nach Anspruch 4, wobei der Prallsack (10) auch mit der besagten Druckgasquelle (19) verbunden ist, um in einem ersten Modus pneumatisch bedienbar und in einem zweiten Modus pyrotechnisch bedienbar zu sein, wobei der Prallsack (10) im besagten ersten Modus mit dem besagten Druckgas teilweise vorher aufgeblasen und der Prallsack (10) im besagten zweiten Modus mit Aufblasgas von dem Gasgenerator her aufgeblasen wird.

6. Sicherheitssystem nach einem vorangehenden Anspruch, das eine Sicherheitsvorrichtung in Form eines pneumatisch bedienbaren Sitzgurtstraffers (11) umfasst, der mit der besagten Druckgasquelle (19) verbunden ist.

7. Sicherheitssystem nach Anspruch 6, wobei der besagte Sitzgurtstraffer (11) auch mit einer pyrotechnischen Ladung (21) verbunden ist, um in einem ersten Modus pneumatisch bedienbar und in einem zweiten Modus pyrotechnisch bedienbar zu sein, wobei im besagten ersten Modus ein anfänglicher Grad von Erschlaffung im Sitzgurt (22) aufgenommen wird.

8. Sicherheitssystem nach Anspruch 6 oder 7, wobei der Sitzgurtstraffer (11) einen Rotor (29) umfasst, der in einem Gehäuse (27) zur Drehung relativ dazu vorgesehen ist, und wobei eine Abdeckplatte (30) vorgesehen ist, um das Gehäuse (27) zu verschließen, wobei die Abdeckplatte (30) mit einer Gaseinlassöffnung (31) und einer Gasauslassöffnung (32) in fluidischer Verbindung mit dem Rotor (29) in dem Gehäuse (27) ausgestattet ist und wobei Gas beim Gebrauch durch den Gaseinlass (31) an den Rotor (29) übermittelt wird, wobei das Gas dazu dient, den Rotor (29) zu drehen und daher auch eine Nabe (26) zu drehen, die dazu dient, eine Spule (23) in einer zum Festziehen des Sitzgurts (22) wirksamen Art zu drehen.

9. Sicherheitssystem nach einem vorangehenden Anspruch, das eine Sicherheitsvorrichtung umfasst, die beim Empfang eines ersten besagten Signals pneumatisch bedienbar ist, um mindestens einen Teil einer am Sitz montierten Kopfstütze (53) hin zum Kopf eines Fahrzeuginsassen auf dem Sitz zu bewegen.

10. Sicherheitssystem nach einem vorangehenden Anspruch, das eine Sicherheitsvorrichtung umfasst, die beim Empfang eines ersten besagten Signals pneumatisch bedienbar ist, um mindestens einen Teil (61) einer Fahrzeug-Stoßfangvorrichtung (59) zu bewegen.

11. Sicherheitssystem nach einem vorangehenden Anspruch, das eine Sicherheitsvorrichtung umfasst, die beim Empfang eines ersten besagten Signals pneumatisch bedienbar ist, um einen Teil einer Fahrzeugkonstruktion zu verstärken.

12. Sicherheitssystem nach einem vorangehenden Anspruch, das eine Sicherheitsvorrichtung in Form einer Motorhaubenanhebevorrichtung (9) umfasst, die beim Empfang eines ersten besagten Signals pneumatisch bedienbar ist, um einen Teil einer Fahrzeugmotorhaube (1) anzuheben.

13. Sicherheitssystem nach einem vorangehenden Anspruch, das eine Sicherheitsvorrichtung umfasst, die beim Empfang eines ersten besagten Signals pneumatisch bedienbar ist, um einen Fahrzeugsitz (46) relativ zum Chassis des Fahrzeugs zu verschieben.

## Revendications

1. Un système de sécurité destiné à être utilisé sur un véhicule automobile, le système se composant de ce qui suit :
une source de gaz comprimé (19) ;
au moins un dispositif de sécurité (9, 10, 11) dans lequel le ou les dispositifs de sécurité (9, 10, 11) sont opérationnellement connectés à la source de gaz comprimé (19) de façon à pouvoir fonctionner pneumatiquement ;
un capteur (4, 5) ;
une unité de commande (7) ; et
une charge pyrotechnique (21), dans lequel le ou les dispositifs de sécurité (9, 10, 11) sont opérationnellement connectés à la charge pyrotechnique (21) de façon à pouvoir fonctionner pyrotechniquement, et dans lequel l'unité de commande (7) est configurée pour actionner le ou les dispositifs de sécurité (9, 10, 11) pneumatiquement à la réception d'un premier signal du capteur (4, 5), et pour actionner le ou les dispositifs (9, 10, 11) pyrotechniquement à la réception d'un deuxième signal du capteur (4, 5), **se caractérisant par le fait que** le premier signal est indicatif d'un accident anticipé et que le deuxième signal est indicatif d'un accident en train de se produire.

2. Un système de sécurité conformément à la revendication 1, dans lequel le ou les dispositifs de sécurité (9, 10, 11) peuvent être réinitialisés en vue du réactionnement après l'actionnement pneumatique, mais pas après l'actionnement pyrotechnique.

3. Un système de sécurité conformément à n'importe laquelle des revendications précédentes, dans lequel le deuxième signal est indicatif d'un accident en train de se produire au-dessus d'un seuil de gravité prédéterminé.

4. Un système de sécurité conformément à n'importe laquelle des revendications précédentes, se composant d'un dispositif de sécurité se présentant sous la forme d'un coussin d'air (10) raccordé à un gonfleur fonctionnant pyrotechniquement.

5. Un système de sécurité conformément à la revendication 4, dans lequel le coussin d'air (10) est également raccordé à la source de gaz comprimé (19) de façon à pouvoir être utilisé pneumatiquement dans un premier mode, et pyrotechniquement dans un deuxième mode, dans lequel le premier mode prégonfle partiellement le coussin d'air (10) avec le gaz comprimé et le deuxième mode gonfle le coussin d'air (10) avec le gaz du gonfleur.

6. Un système de sécurité conformément à n'importe laquelle des revendications précédentes, se composant d'un dispositif de sécurité se présentant sous la forme d'un prétendeur de ceinture de sécurité fonctionnant pneumatiquement (11) et raccordé à la source de gaz comprimé (19).

7. Un système de sécurité conformément à la revendication 6, dans lequel le prétendeur de ceinture de sécurité (11) est également raccordé à une charge pyrotechnique (21) de façon à pouvoir fonctionner pneumatiquement dans un premier mode et pyrotechniquement dans un deuxième mode, dans lequel le premier mode rattrape un degré de jeu initial dans la ceinture de sécurité (22).

8. Un système de sécurité conformément à la revendication 6 ou 7, dans lequel le prétendeur de ceinture de sécurité (11) se compose d'un rotor (29) se trouvant dans un boîtier (27) pour assurer la rotation, et dans lequel un couvercle (30) permet de fermer le boîtier (27), le couvercle (30) étant muni d'une ouverture d'entrée de gaz (31) et d'une ouverture de sortie de gaz (32) en communication fluide avec le rotor (29) dans le boîtier (27) et dans lequel, en cours d'utilisation, le gaz est transmis au rotor (29) par l'entrée de gaz (31), le gaz faisant ainsi tourner le rotor (29) ainsi qu'un bossage (26), ce qui permet de faire tourner une bobine (23) de façon à tendre la ceinture de sécurité (22).

9. Un système de sécurité conformément à n'importe laquelle des revendications précédentes, se composant d'un dispositif de sécurité fonctionnant pneumatiquement pour amener au moins une partie d'un appui-tête monté sur le siège (53) vers la tête d'un occupant de siège à la réception d'un premier signal.

10. Un système de sécurité conformément à n'importe laquelle des revendications précédentes, se composant d'un dispositif de sécurité fonctionnant pneumatiquement pour actionner au moins une partie (61) d'un pare-chocs de véhicule (59) à la réception d'un premier signal.

11. Un système de sécurité conformément à n'importe laquelle des revendications précédentes, se composant d'un dispositif de sécurité fonctionnant pneumatiquement pour renforcer une partie d'une structure du véhicule à la réception d'un premier signal.

12. Un système de sécurité conformément à n'importe laquelle des revendications précédentes, se composant d'un dispositif de sécurité sous la forme d'un leveur de capot (9), fonctionnant pneumatiquement pour soulever une partie du capot d'un véhicule (1) à la réception d'un premier signal.

13. Un système de sécurité conformément à n'importe laquelle des revendications précédentes, se composant d'un dispositif de sécurité pouvant fonctionner pneumatiquement afin de faire glisser un siège de véhicule (46) par rapport au châssis du véhicule à la réception d'un premier signal.
